# EUROPEAN PATENT SPECIFICATION

(11) **EP 4 206 452 B1**
(45) Date of publication and mention of the grant of the patent: **11.03.2026**
(21) Application number: 21218286.9
(22) Date of filing: 30.12.2021
(51) Int. Cl.: F02C 7/26

(54) **METHOD FOR OPERATING A GAS TURBINE ASSEMBLY FOR A POWER PLANT AND GAS TURBINE ASSEMBLY FOR A POWER PLANT**
VERFAHREN ZUM BETRIEB EINER GASTURBINENANORDNUNG FÜR EIN KRAFTWERK UND GASTURBINENANORDNUNG FÜR EIN KRAFTWERK
PROCÉDÉ DE FONCTIONNEMENT D'UN ENSEMBLE TURBINE À GAZ DE CENTRALE ÉLECTRIQUE ET ENSEMBLE TURBINE À GAZ DE CENTRALE ÉLECTRIQUE

(43) Date of publication of application: 05.07.2023
(73) Proprietor: Ansaldo Energia Switzerland AG, 5400 Baden (CH)
(72) Inventor: SINGLA, Ghislain, 5400 BADEN (CH); GRANET, Victor, 5400 BADEN (CH); SMITH, Richard, 5400 BADEN (CH); APPEL, Christoph, 5400 BADEN (CH)
(74) Representative: Studio Torta S.p.A.

(56) References cited:
- EP-A1- 3 447 379
- EP-A1- 3 683 426
- EP-A2- 2 600 063
- WO-A1-2010/112318

## Description

### Field of the Invention

The present invention relates to the technical field of the gas turbine assemblies for power plants. In particular, the present invention refers to a gas turbine assembly with sequential combustors. Moreover, the present invention relates to a method for operating a gas turbine assembly.

### Background

As known, a gas turbine assembly for a power plant comprises a compressor, a combustor assembly and a turbine.

The compressor is configured for compressing incoming air supplied at its inlet.

As known, at the inlet, the compressor is provided with variable inlet guide vanes (VIGV). The variable inlet guide vanes have an adjustable position in order to regulate the amount of air entering into the compressor. At the position of maximum opening, the variable inlet guide vanes allow entrance of the maximum air mass flow into the compressor, while at the position of minimum opening the variable inlet guide vanes allow entrance of the minimum amount of air mass flow into the compressor.

The compressed air leaving the compressor assembly flows into a closed volume (called "plenum") and from there into the combustor assembly.

The combustor assembly comprises usually a plurality of burners configured for injecting fuel (at least one type of fuel, gaseous or liquid fuel) into the compressed air flow. The mixture of fuel and compressed air enters a combustion chamber where this mixture ignites.

The resulting hot gas flow leaves the combustion chamber and flows through the turbine assembly performing a rotating work on a rotor connected to a generator. Usually the same rotor supports also the compressor assembly.

As known, the turbine comprises a plurality of stages of rotating blades that are interposed by a plurality of stages of stator vanes. The rotating blades are supported by the rotor, whereas the stator vanes are supported by a casing (normally called "vane carrier") surrounding the rotor.

In order to achieve a high efficiency, the hot gas flow entering the turbine should have the highest temperature. However, high temperatures involve undesired high NOx emission levels.

In order to reduce the NOx emissions and to increase operational flexibility without decreasing the efficiency, a so called "sequential combustor" assembly is used. In general, a sequential combustor comprises two combustion stages arranged in series.

The gas turbine power obtainable by the gas turbine assembly operation can be modulated by regulating the variable inlet guide vane position as well as the injected fuel flow rate into the sequential combustor assembly.

The fuel amount supplied to the first and the second combustor can be controlled too.

The turbine assembly above described is part of a power plant connected to an electrical grid.

In the last years, electrical grids are receiving more and more contributions from renewable sources. Renewable sources are not programmable and often are characterized by a high concentration of power production in some periods, not always predictable.

This implies that power plants able to produce energy in a controlled way (such as gas turbine power plants) have to operate in a flexible way.

Said flexibility implies that the gas turbine assembly should properly react to transient situations, in which a fast and significant variation of the energy produced by the plant is required. In other words, the gas turbine assembly should be able to reduce and increase quickly the amount of the power produced (for example passing from baseload to minimum load and vice versa). Analogously, also the start-up phases of the gas turbine assembly should be quick.

Obviously, all the energy production variations should be reached without violating the emission limits.

During the start-up phases, in particular, the amount of emissions is strongly limiting the operation of the gas turbine assembly as the CO emissions increases rapidly with lower firing temperatures normally associated to reduced power.

A known solution is to operate only the first combustor during the start-up period and to ignite the second combustor after the gas turbine assembly is connected to the electrical grid and only after reaching a defined inlet air temperature.

This implies a CO emission peak overcoming the limits during the gas turbine loading phase (GT loading phase). A solution of this kind is disclosed in document EP3683426.

### Disclosure of the invention

It is therefore an object of the present invention to provide a method for operating a gas turbine assembly, which is able to obtain a quick and reliable start-up of the gas turbine assembly while keeping controlled the amount of emissions produced below the required emission limits, especially during the gas turbine loading phase.

Thus, the present invention refers to a method for operating a gas turbine assembly for a power plant comprising the steps of:
- providing a gas turbine assembly comprising a compressor, a combustor assembly, a turbine and a generator; the compressor, the turbine and the generator being connected to a common rotor rotating around an axis; the combustor assembly comprising at least one first combustor and at least one second combustor arranged downstream the first combustor along a gas flow direction;
- starting-up the gas turbine assembly;
   wherein the step of starting up the gas turbine assembly comprising:
   - rotating the rotor by an external starting system without any fuel feeding;
   - supplying fuel to the first combustor and igniting it;
   - increasing the amount of fuel supplied to the first combustor to obtain an acceleration of the rotor until the rotor reaches a target speed;
   - operating the rotor at idle until a signal of allowance to synchronize to a public grid is received;
   - synchronizing the gas turbine assembly to public grid requirements;
   - connecting the gas turbine assembly to the public grid;
   - increasing the load produced by the gas turbine assembly until the reaching of a minimum load target value;
      the method being characterized by comprising the step of igniting the second combustor before reaching the minimum load target value and after the ignition of the first combustor.

Advantageously, according to the method above the gas turbine assembly can be started-up in a quick way and with a controlled amount of carbon monoxide (CO) emissions as soon as minimum load target value is reached.

It is furthermore an object of the present invention to provide a gas turbine assembly able to start and reach the base load in a quick way while keeping controlled the amount of emissions produced.

According to the said object, the present invention relates to a gas turbine assembly as claimed in claim 12.

### Brief description of drawings

Further benefits and advantages of the present invention will become apparent after a careful reading of the detailed description with appropriate reference to the accompanying drawings, which illustrate some non-limitative embodiment, wherein:
- figure 1 is a schematic representation of a gas turbine assembly according to the present invention;
- figure 2 is a diagram showing the trend of rotor speed and load during the start-up and GT loading phases of the gas turbine assembly according to the present invention;
- figure 3 is a diagram showing the emission trends as a function of load in the gas turbine assembly according to the present invention.

### Detailed description of preferred embodiments of the invention

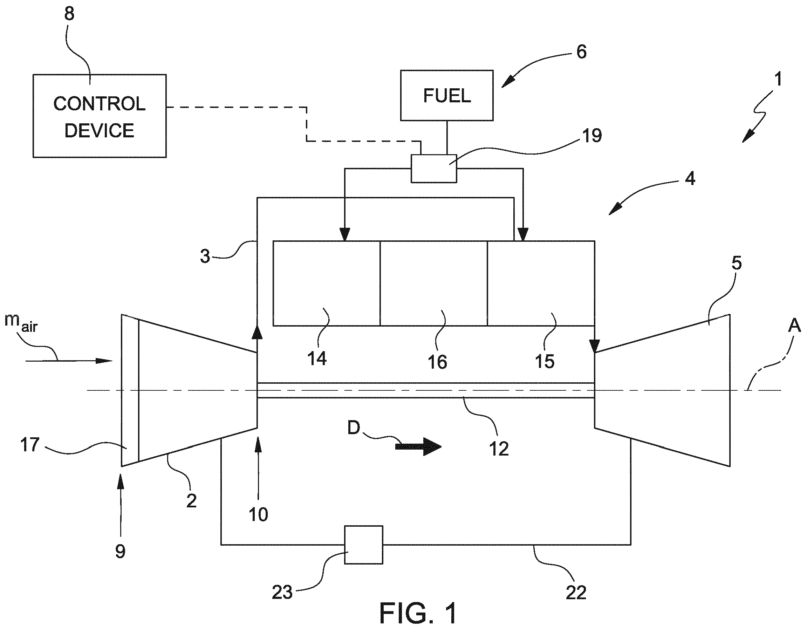

In figure 1 reference numeral 1 indicates a gas turbine assembly schematically represented.

The gas turbine assembly 1 comprises a compressor 2, a plenum 3, a combustor assembly 4, a turbine 5, an generator (not shown), a fuel supply assembly 6 and a control device 8. The compressor 2 and the turbine 5 extend along a main axis A.

The compressor 2, the turbine 5 and the generator are connected to a common rotor 12 rotating around an axis A.

The compressor 2 comprises an inlet 9 supplied with air and an outlet 10 through which the air compressed by the compressor 2 flows; the outlet 10 of the compressor 2 comes out into the plenum 3, which is in fluidic communication with the combustor assembly 4.

The fuel supply assembly 6 supplies at least one fuel to the combustor assembly 4. In the combustor assembly 4, air compressed coming from the plenum 3 is mixed with fuel and burned.

The burned mixture is then expanded in the turbine 5 and converted in mechanical power by the common rotor 12, which is connected to the generator (not shown).

The combustor assembly 4 is a sequential combustor assembly which comprises a first combustor 14 and a second combustor 15 sequentially arranged along the gas flow direction D. In other words, the second combustor 15 is arranged downstream the first combustor 14 along the gas flow direction D.

Preferably, between the first combustor 14 and the second combustor 15 a mixer 16 is arranged.

According to a variant not illustrated of the present invention, the sequential combustor assembly can comprise a high pressure turbine instead of the mixer between the first combustor and the second combustor.

The first combustor 14 and the second combustor 15 comprise respectively a plurality of burners (which are not visible in figure 1). In the non-limiting example here disclosed and illustrated, the first combustor 14 and the second combustor 15 are annular combustors.

According to a variant not illustrated of the present invention, the combustor assembly can be defined by a plurality of can-shaped arrangements, wherein each can arrangement comprises a first combustor and a second combustor arranged directly one downstream the other.

In the non-limiting example here disclosed and illustrated, the fuel supply assembly 6 supplies at least one fuel to the first combustor 14 and to the second combustor 15 and preferably comprises an actuator assembly 19 (schematically represented) configured to regulate the amount of fuel supplied to the first combustor 14 and to the second combustor 15 under the control of the control device 8.

Preferably, the actuator assembly 19 is configured to regulate the fuel supply to each burner of the plurality of burners of the first combustor 14 and of the second combustor 15. For example, the actuator assembly 19 can comprise two fuel rings (one for each combustor), a control valve for controlling the overall fuel mass flow supplied to each fuel ring and a plurality of on/off valves on the lines connecting each burner with the respective fuel ring.

In this way, a selective supplying of the burners can be performed as detailed later on.

The air supplied to the first combustor 14 and to the second combustor 15 comes from the plenum 3.

The amount of air in the plenum 3 depends on the amount of air mass entering in the compressor 2. A part of the air entering the plenum 3 is, however, used for cooling parts of the gas turbine assembly, like turbine vanes / blades, etc.

The amount of air mass entering in the compressor 2 can be varied by modifying the position of the inlet guide vanes 17 (schematically illustrated) at the inlet 9 of the compressor 2.

The gas turbine assembly 1 comprises also a by-pass line 22 configured to connect the gas turbine 5 with the compressor 2 and provided with a bleed valve 23.

The bleed valve 23 is configured to adjust the air flow rate leaving the compressor 2 and bypassing the combustor assembly 4.

The regulation of the air mass flow by-passing the combustor assembly 4 implies a regulation of the amount of air in the plenum 3 and, therefore, a consequent regulation of the air supplied to the combustor assembly 4.

The control device 8 is configured to control the combustor assembly 4, the fuel supply assembly 6 (i.e., the actuator assembly 19), the position of the inlet guide vanes 17 and the position of the bleed valve 23.

In use, starting the gas turbine assembly 1 puts the rotor 12 in rotation, producing electrical energy in the generator.

The electrical energy produced by the gas turbine assembly is supplied to a public electric grid through a high-voltage switch (not shown).

The connection to the public grid, however, can be made only when certain conditions are met in terms of rotor speed, voltage, combustion conditions, etc.

This means that there is a period before the gas turbine assembly 1 being connected to the public grid during which the gas turbine assembly 1 reaches the conditions required to be connected to the public grid.

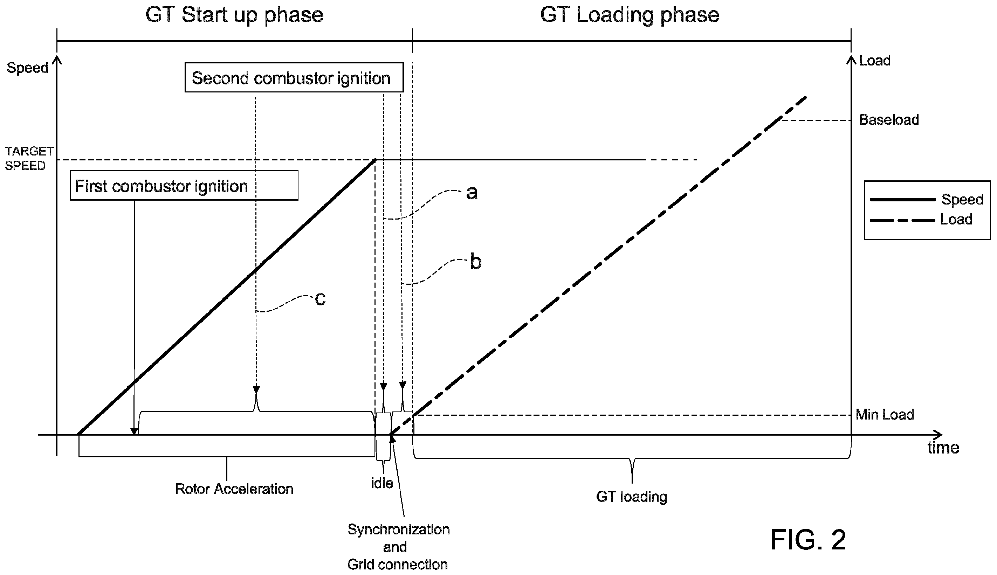

With reference to figure 2, after being connected to the public grid, the gas turbine assembly 1 reaches quickly a minimum load production condition. From the minimum load on, the turbine assembly 1 starts its loading phase, increasing the load from the minimum to the base load and then varying it, depending on the power needs.

The period comprised from the starting of the rotor acceleration until the reaching of the minimum load is here considered a "start-up" period.

In particular, the start-up period comprises the following steps:
- dry cranking: in this step, the rotor 12 is rotated by an external starting system without any fuel feeding;
- purging (optional): in this step, residual fuel from previous operation or failed start attempts is purged out of the gas turbine assembly 1;
- first ignition: in this step fuel is fed to the first combustor 14 and igniters are energized to ignite the first combustor 14;
- rotor acceleration: in this step the fuel mass flow rate to the first combustor 14 is increased and the rotational speed of the rotor 12 increases towards a target speed value (e.g. 3000 rpm);
- idle: operating the rotor (12) at idle until a signal of allowance to synchronize to a public grid is received; this condition is also called FSNL (full speed no load);
- synchronization: in this step, the phases of the generator are synchronized to the proper phase of the grid;
- connection: the high-voltage switch connecting the gas turbine assembly (1) to the public grid is closed;
- min load reaching: the load produced by the gas turbine is increased until the reaching of a minimum load target value, which is predefined for each gas turbine assembly; the minimum load target value is the minimum load ensuring continuous operation of the gas turbine assembly 1 when connected to the public grid.

According to the present invention, the start-up period further comprises also the step of igniting the second combustor 15 (also called second ignition).

The ignition of the second combustor is made between the first ignition phase and the min load reaching phase.

In other words, the step of igniting the second combustor 15 is made before reaching the min load and after the ignition of the first combustor 14.

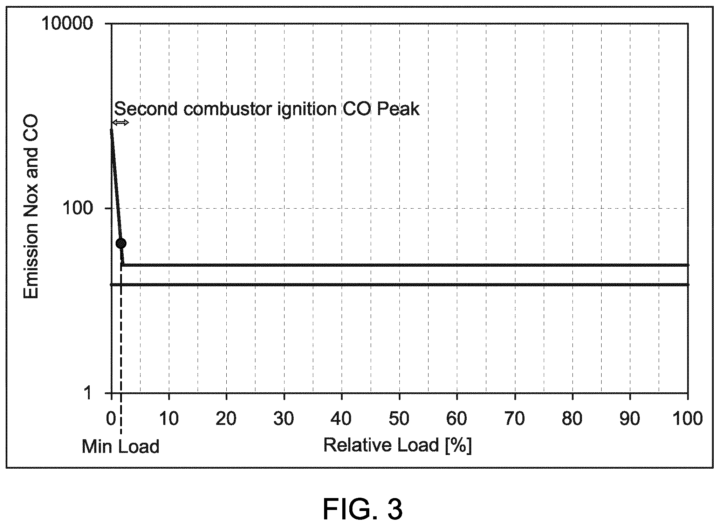

Looking at the diagram in figure 3, performing the second ignition between the first ignition phase and the min load reaching phase implies that the CO emission peak occurs before the gas turbine load reaches Min Load. This means that during the subsequent phase of gas turbine loading (i.e. from min load to base load - see GT loading phases in figure 2) the CO emissions are stable and kept always under the limits.

The second ignition can be made substantially in several moments between the first ignition phase and min load reaching phase.

Preferably, the second ignition is obtained by supplying fuel to the second combustor 15 when the temperature at the inlet of the second combustor 15 is greater than a threshold value sufficient to obtain an auto-ignition combustion in the second combustor 15.

In this way igniting means are avoided and the auto ignition process available for the second combustor 15 is exploited.

A first option (indicated with arrow a) is to ignite the second combustor 15 during the step of operating the rotor 12 at idle (idle phase), while waiting the ok for synchronizing.

Advantageously in that step the firing temperature of the first combustor 14 is high and sufficient to enable the carbon monoxide (CO) to burn out. This implies a reduction of the ignition delay time for the second combustor 15 and therefore an increase of the residence time in the second combustor 15 (due to a reheat flame moving upstream).

Subsequently, a reduction of the oxidation delay time is obtained, keeping CO emission below emission limits.

A second option (indicated with arrow b) is to ignite the second combustor 15 at any time between grid connection and the Min Load reaching (full speed minimum load). Preferably, synchronization and grid connection are included in the above interval.

During said time interval gas turbine assembly 1 is loading in order to quickly reach the minimum load.

This solution has the advantage above described for the ignition at idle and has another advantage: avoiding producing emissions in a phase (i.e. idle phase) having a length that is not controllable and depends on the public grid management.

A third option (indicated with arrow c) is to ignite the second combustor 15 during the rotor acceleration phase after the first ignition. This means that the second combustor 15 can be ignited at any time between the first ignition and the idle reaching (full speed no load condition).

This solution has the advantage to accelerate the start-up period as the target speed of the rotor 12 can be reached faster.

If necessary, the fuel supply to the second combustor 15 during second ignition phase can be partialized.

In the non-limiting example here disclosed and illustrated this means that the step of supplying fuel to the second combustor 15 during the starting up comprises selectively supplying fuel to a group of burners of the plurality of burners of the second combustor 15.

In other words the actuator assembly 19, under the control of the control device 8, regulates the fuel supply to each burner of the plurality of burners of the second combustor 15 in order to supply fuel only to a group of burners (i.e. by opening only a group of the plurality of on/off valves on the lines connecting each burner with the respective fuel ring).

In this way, a selective supplying of the burners can be performed and adjusted in order to have a load at the connection to public grid which is minimum and emission compliant.

According to a variant not shown, if the combustor assembly comprises a plurality of can-shaped arrangements; the partial distribution of the fuel supply to the second combustor 15 can be obtained by selectively supplying fuel to the second combustors of a group of can-shaped arrangements of the plurality of can-shaped arrangements.

The partial distribution of the fuel supply can also be made on the first combustor 14 by stopping the fuel supply only to a group of burners of the first combustor 14 (i.e. by closing only a group of the plurality of on/off valves on the lines connecting each burner with the respective fuel ring). In other words, a switching-off of some burners of the first combustor 14 can be made. In this way, a selective supplying of the burners can be performed and adjusted in order to have a load at the connection to public grid, which is minimum and emission compliant.

Preferably, the switching-off of some burners of the first combustor 14 is made before the ignition of the second combustor 15.

By closing individual on/off valves, in fact, the fuel feed to some burners is stopped and is distributed to the remaining operative burners. As a result, the air-fuel equivalence ratio λ of the burners in operation is decreased and the hot gas temperature is raised, accelerating the reach of the threshold value of the temperature at the inlet of the second combustor 15 sufficient to obtain an auto-ignition in the second combustor 15.

As already mentioned, the air-flow rate supplied to the combustor assembly 4 can be controlled also during the start-up period by adjusting the position of the variable inlet guide vanes (VIGV) at the inlet of the compressor 2 and/or by adjusting the position of the bleed valve 23 of the bypass line 22 connecting the compressor 2 with the gas turbine 5.

Advantageously, igniting the reheat combustion system before min load reaching and not during the gas turbine loading phase allows also a reliable and quick black grid restoration with only fuel gas supply.

When a black-out of the grid occurs, grid is not available anymore. In this case, the gas turbine assembly quickly goes to house-load condition (i.e. the generator can provide power only to the auxiliaries of the gas turbine assembly) .

When the grid asks for grid restoration after the black out (normally called "black grid restoration"), the gas turbine assembly must load up in order to ensure that the frequency of the grid stays in the targeted frequency band (50Hz ± x Hz) whenever another consumer is switch to the grid.

According to the invention, as the second combustor 15 is already ignited at house-load, the gas turbine assembly 1 according to the invention can offer every kind of load jumps between house load and baseload.

This means that the gas turbine assembly can operate applying the standard operation concept also during black grid restoration. This means that, when black grid restoration is triggered, fuel is simply increased and VIGV starts to open according to the standard operation concept.

On the contrary, if the second combustor is not ignited at min load reaching, there will be a certain load range, where the gas turbine can not stay in stable operation for a longer period of time (i.e. the period during which the second combustor should be ignited). This means that a dedicated operation concept should be adopted during black grid restoration with obvious and evident complications and costs. Similarly, igniting the second combustor before min load reaching is beneficial for frequency response (FR) operation. Frequency response compliance is typically given in the load range wherein the second combustor is already in operation. According to the claimed invention, as the second combustor is in operation already at Min Load, frequency compliancy can be covered for the complete gas turbine loading range from min load to base load.

Although the invention has been explained in relation to its preferred embodiments as mentioned above, it is to be understood that many other possible modifications and variations can be made without departing from the scope of the appended claims.

## Claims

1. A method for operating a gas turbine assembly for a power plant; the method comprising the steps of:
- providing a gas turbine assembly (1) comprising a compressor (2), a combustor assembly (4), a turbine (5) and an generator; the compressor (2), the turbine (5) and the generator being connected to a common rotor (12) rotating around an axis (A); the combustor assembly (4) comprising at least one first combustor (14) and at least one second combustor (15) arranged downstream the first combustor (14) along a gas flow direction (D);
- starting-up the gas turbine assembly (1);
wherein the step of starting up the gas turbine assembly (1) comprising:
- rotating the rotor (12) by an external starting system without any fuel feeding;
- supplying fuel to the first combustor (14) and igniting it;
- increasing the amount of fuel supplied to the first combustor (14) to obtain an acceleration of the rotor (12) until the rotor (12) reaches a target speed;
- operating the rotor (12) at idle until a signal of allowance to synchronize to a public grid is received;
- synchronizing the gas turbine assembly (1) to public grid requirements;
- connecting the gas turbine assembly (1) to the public grid;
- increasing the load produced by the gas turbine assembly (1) until the reaching of a minimum load target value;
the method being **characterized by** comprising the step of igniting the second combustor (15) before reaching the minimum load target value and after the ignition of the first combustor (14).

2. Method according to claim 1, wherein the step of igniting the second combustor (15) is made during the step of operating the rotor (12) at idle.

3. Method according to claim 1, wherein the step of igniting the second combustor (15) is made during the step of synchronizing the gas turbine assembly (1) to public grid requirements or during the step of connecting the gas turbine assembly (1) to the public grid.

4. Method according to claim 1, wherein the step of igniting the second combustor (15) is made at any time between grid connection and the Min Load reaching.

5. Method according to claim 1, wherein the step of igniting the second combustor (15) is made at any time during rotor acceleration until the rotor (12) reaches a target speed.

6. Method according to any of the preceding claims, comprising the step of igniting the second combustor (15) comprises supplying fuel to the second combustor (15) when the temperature at the inlet of the second combustor (15) is greater than a threshold value sufficient to obtain an auto-ignition combustion in the second combustor (15).

7. Method according to claim 6, wherein the second combustor (15) comprises a plurality of burners; the step of supplying fuel to the second combustor (15) during the igniting comprising selectively supplying fuel to a group of burners of the plurality of burners of the second combustor (15).

8. Method according to claim 6, wherein the combustor assembly comprises a plurality of can-shaped arrangements; each can arrangement comprising the first combustor and the second combustor; the step of supplying fuel to the second combustor during the igniting comprising selectively supplying fuel to the second combustor of a group of can-shaped arrangements of the plurality of can-shaped arrangements.

9. Method according to any of the preceding claims, wherein the step of starting up the gas turbine assembly (1) comprises the step of controlling an air-flow rate supplied to the combustor assembly (4) by adjusting the position of the variable inlet guide vanes (VIGV) at the inlet of the compressor (2).

10. Method according to any of the preceding claims, wherein the step of starting up the gas turbine assembly (1) comprises the step of controlling an air-flow rate supplied to the combustor assembly (4) by adjusting the position of a bleed valve (23) of a bypass line (22) connecting the compressor (2) with the gas turbine (5).

11. Method according to any of the foregoing claims, comprising the step of public grid restoration after a blackout of the public grid; said step of public grid restoration comprises increasing the load and adjusting the position of the variable inlet guide vanes (VIGV) at the inlet of the compressor (2).

12. Gas turbine assembly for a power plant comprising a compressor (2), a combustor assembly (4), a turbine (5), an generator and a control device (8); the compressor (2), the turbine (5) and the generator being connected to a common rotor (12) rotating around an axis (A); the combustor assembly (4) comprising at least one first combustor (14) and at least one second combustor (15) arranged downstream the at least one first combustor (14) along a gas flow direction (D); the control device (8) being configured to perform the method according to anyone of the foregoing claims.

## Patentansprüche

1. Verfahren zum Betreiben einer Gasturbinenanordnung für ein Kraftwerk; wobei das Verfahren die folgenden Schritte umfasst:
- Bereitstellen einer Gasturbinenanordnung (1), die einen Kompressor (2), eine Brennkammeranordnung (4), eine Turbine (5) und einen Generator beinhaltet; wobei der Kompressor (2), die Turbine (5) und der Generator mit einem gemeinsamen Rotor (12) verbunden sind, der sich um eine Achse (A) dreht; wobei die Brennkammeranordnung (4) mindestens eine erste Brennkammer (14) und mindestens eine zweite Brennkammer (15) aufweist, die entlang einer Gasströmungsrichtung (D) stromabwärts von der ersten Brennkammer (14) angeordnet ist;
- Starten der Gasturbinenanordnung (1);
wobei der Schritt des Startens der Gasturbinenanordnung (1) umfasst:
- Drehen des Rotors (12) durch ein externes Startsystem ohne Zufuhr von Brennstoff;
- Liefern von Brennstoff an die erste Brennkammer (14) und Zünden des Brennstoffs;
- Erhöhen der Menge an die erste Brennkammer (14) gelieferten Brennstoffs, um eine Beschleunigung des Rotors (12) zu bewirken, bis der Rotor (12) eine Zieldrehzahl erreicht;
- Betreiben des Rotors (12) im Leerlauf, bis ein Signal der Erlaubnis zum Synchronisieren mit einem öffentlichen Netz empfangen wird;
- Synchronisieren der Gasturbinenanordnung (1) mit den Anforderungen des öffentlichen Netzes;
- Verbinden der Gasturbinenanordnung (1) mit dem öffentlichen Netz;
- Erhöhen der von der Gasturbinenanordnung (1) erzeugten Last, bis ein minimaler Lastzielwert erreicht wird;
wobei das Verfahren **dadurch gekennzeichnet ist, dass** es den Schritt des Zündens der zweiten Brennkammer (15) vor dem Erreichen des minimalen Lastzielwerts und nach dem Zünden der ersten Brennkammer (14) umfasst.

2. Verfahren gemäß Anspruch 1, wobei der Schritt des Zündens der zweiten Brennkammer (15) während des Schritts des Betreibens des Rotors (12) im Leerlauf durchgeführt wird.

3. Verfahren gemäß Anspruch 1, wobei der Schritt des Zündens der zweiten Brennkammer (15) während des Schritts des Synchronisierens der Gasturbinenanordnung (1) mit den Anforderungen des öffentlichen Netzes oder während des Schritts des Verbindens der Gasturbinenanordnung (1) mit dem öffentlichen Neutz durchgeführt wird.

4. Verfahren gemäß Anspruch 1, wobei der Schritt des Zündens der zweiten Brennkammer (15) zu einer beliebigen Zeit zwischen der Netzverbindung und dem Erreichen der minimalen Last durchgeführt wird.

5. Verfahren gemäß Anspruch 1, wobei der Schritt des Zündens der zweiten Brennkammer (15) zu einer beliebigen Zeit während der Rotorbeschleunigung, bis der Rotor (12) eine Zieldrehzahl erreicht, durchgeführt wird.

6. Verfahren gemäß einem der vorhergehenden Ansprüche, umfassend, dass der Schritt des Zündens der zweiten Brennkammer (15) ein Liefern von Brennstoff an die zweite Brennkammer (15) beinhaltet, wenn die Temperatur an dem Einlass der zweiten Brennkammer (15) höher als ein Schwellenwert ist, der dazu ausreicht, eine Selbstzündungs-Verbrennung in der zweiten Brennkammer (15) zu erreichen.

7. Verfahren gemäß Anspruch 6, wobei die zweite Brennkammer (15) eine Mehrzahl von Brennern beinhaltet; wobei der Schritt des Lieferns von Brennstoff an die zweite Brennkammer (15) während des Zündens ein selektives Liefern von Brennstoff an eine Gruppe von Brennern der Mehrzahl von Brennern der zweiten Brennkammer (15) beinhaltet.

8. Verfahren gemäß Anspruch 6, wobei die Brennkammeranordnung eine Mehrzahl rohrförmiger Anordnungen umfasst, wobei jede Rohranordnung die erste Brennkammer und die zweite Brennkammer beinhaltet; wobei der Schritt des Lieferns von Brennstoff an die zweite Brennkammer während des Zündens ein selektives Liefern von Brennstoff an die zweite Brennkammer einer Gruppe von rohrförmigen Anordnungen der Mehrzahl von rohrförmigen Anordnungen beinhaltet.

9. Verfahren gemäß einem der vorhergehenden Ansprüche, wobei der Schritt des Startens der Gasturbinenanordnung (1) den Schritt des Steuerns einer Luftstromrate, die an die Brennkammeranordnung (4) geliefert wird, durch Einstellen der Position der verstellbaren Einlass-Leitschaufeln (VIGV) an dem Einlass des Kompressors (2) beinhaltet.

10. Verfahren gemäß einem der vorhergehenden Ansprüche, wobei der Schritt des Startens der Gasturbinenanordnung (1) den Schritt des Steuerns einer Luftstromrate, die an die Brennkammeranordnung (4) geliefert wird, durch Einstellen der Position eines Ausblaseventils (23) einer Bypass-Leitung (22), die den Kompressor (2) mit der Gasturbine (5) verbindet, beinhaltet.

11. Verfahren gemäß einem der vorhergehenden Ansprüche, umfassend den Schritt einer Wiederherstellung der Verbindung mit dem öffentlichen Netz nach einem Blackout des öffentlichen Netzes; wobei der Schritt der Wiederherstellung der Verbindung mit dem öffentlichen Netz ein Erhöhen der Last und ein Einstellen der Position der verstellbaren Einlass-Leitschaufeln (VIGV) an dem Einlass des Kompressors (2) beinhaltet

12. Gasturbinenanordnung für ein Kraftwerk, die einen Kompressor (2), eine Brennkammeranordnung (4), eine Turbine (5), einen Generator und eine Steuerungsvorrichtung (8) beinhaltet; wobei der Kompressor (2), die Turbine (5) und der Generator mit einem gemeinsamen Rotor (12) verbunden sind, der sich um eine Achse (A) dreht; wobei die Brennkammeranordnung (4) mindestens eine erste Brennkammer (14) und mindestens eine zweite Brennkammer (15) aufweist, die entlang einer Gasströmungsrichtung (D) stromabwärts von der ersten Brennkammer (14) angeordnet ist; wobei die Steuerungsvorrichtung (8) dazu konfiguriert ist, das Verfahren gemäß einem der vorhergehenden Ansprüche auszuführen.

## Revendications

1. Procédé de fonctionnement d'un ensemble turbine à gaz d'une centrale électrique ; le procédé comprenant les étapes de :
- fourniture d'un ensemble turbine à gaz (1) comprenant un compresseur (2), un ensemble chambre de combustion (4), une turbine (5) et un générateur ; le compresseur (2), la turbine (5) et le générateur étant reliés à un rotor commun (12) tournant autour d'un axe (A) ; l'ensemble chambre de combustion (4) comprenant au moins une première chambre de combustion (14) et au moins une deuxième chambre de combustion (15) agencée en aval de la première chambre de combustion (14) le long d'une direction d'écoulement gazeux (D) ;
- le démarrage de l'ensemble turbine à gaz (1) ;
dans lequel l'étape de démarrage de l'ensemble turbine à gaz (1) comprend :
- la rotation du rotor (12) par un système de démarrage externe sans une quelconque alimentation en carburant ;
- la distribution de carburant à la première chambre de combustion (14) et son allumage ;
- l'augmentation de la quantité de carburant distribuée à la première chambre de combustion (14) pour obtenir une accélération du rotor (12) jusqu'à ce que le rotor (12) atteigne une vitesse cible ;
- le fonctionnement du rotor (12) au ralenti jusqu'à ce qu'un signal d'autorisation de synchronisation sur un réseau public soit reçu ;
- la synchronisation de l'ensemble turbine à gaz (1) sur les exigences du réseau public ;
- la connexion de l'ensemble turbine à gaz (1) au réseau public ;
- l'augmentation de la charge produite par l'ensemble turbine à gaz (1) jusqu'à atteindre une valeur cible de charge minimale ;
le procédé étant **caractérisé en ce qu'**il comprend l'étape d'allumage de la deuxième chambre de combustion (15) avant d'atteindre la valeur cible de charge minimale et après l'allumage de la première chambre de combustion (14).

2. Procédé selon la revendication 1, dans lequel l'étape d'allumage de la deuxième chambre de combustion (15) est effectuée pendant l'étape de fonctionnement du rotor (12) au ralenti.

3. Procédé selon la revendication 1, dans lequel l'étape d'allumage de la deuxième chambre de combustion (15) est effectuée pendant l'étape de synchronisation de l'ensemble turbine à gaz (1) sur les exigences de réseau public ou pendant l'étape de connexion de l'ensemble turbine à gaz (1) au réseau public.

4. Procédé selon la revendication 1, dans lequel l'étape d'allumage de la deuxième chambre de combustion (15) est effectuée à n'importe quel moment entre la connexion au réseau et l'atteinte de la charge minimale.

5. Procédé selon la revendication 1, dans lequel l'étape d'allumage de la deuxième chambre de combustion (15) est effectuée à n'importe quel moment pendant l'accélération du rotor jusqu'à ce que le rotor (12) atteigne une vitesse cible.

6. Procédé selon l'une quelconque des revendications précédentes, dans lequel l'étape d'allumage de la deuxième chambre de combustion (15) comprend la distribution de carburant à la deuxième chambre de combustion (15) lorsque la température au niveau de l'entrée de la deuxième chambre de combustion (15) est supérieure à une valeur seuil suffisante pour obtenir une combustion par auto-allumage dans la deuxième chambre de combustion (15).

7. Procédé selon la revendication 6, dans lequel la deuxième chambre de combustion (15) comprend une pluralité de brûleurs ; l'étape de distribution de carburant à la deuxième chambre de combustion (15) pendant l'allumage comprenant la distribution de carburant de manière sélective à un groupe de brûleurs de la pluralité de brûleurs de la deuxième chambre de combustion (15).

8. Procédé selon la revendication 6, dans lequel l'ensemble chambre de combustion comprend une pluralité d'agencements cylindriques ; chaque agencement cylindrique comprenant la première chambre de combustion et la deuxième chambre de combustion ; l'étape de distribution de carburant à la deuxième chambre de combustion pendant l'allumage comprenant la distribution de carburant de manière sélective à la deuxième chambre de combustion d'un groupe d'agencements cylindriques de la pluralité d'agencements cylindriques.

9. Procédé selon l'une quelconque des revendications précédentes, dans lequel l'étape de démarrage de l'ensemble turbine à gaz (1) comprend l'étape de commande d'un débit d'air distribué à l'ensemble chambre de combustion (4) en ajustant la position de l'aubage directeur d'entrée orientable (VIGV) au niveau de l'entrée du compresseur (2).

10. Procédé selon l'une quelconque des revendications précédentes, dans lequel l'étape de démarrage de l'ensemble turbine à gaz (1) comprend l'étape de commande d'un débit d'air distribué à l'ensemble chambre de combustion (4) en ajustant la position d'une vanne de purge (23) d'une ligne de dérivation (22) reliant le compresseur (2) avec la turbine à gaz (5).

11. Procédé selon l'une quelconque des revendications précédentes, comprenant l'étape de rétablissement du réseau public après une panne de courant du réseau public ; ladite étape de rétablissement du réseau public comprend l'augmentation de la charge et l'ajustement de la position de l'aubage directeur d'entrée orientable (VIGV) au niveau de l'entrée du compresseur (2).

12. Ensemble turbine à gaz de centrale électrique comprenant un compresseur (2), un ensemble chambre de combustion (4), une turbine (5), un générateur et un dispositif de commande (8) ; le compresseur (2), la turbine (5) et le générateur étant reliés à un rotor commun (12) tournant autour d'un axe (A) ; l'ensemble chambre de combustion (4) comprenant au moins une première chambre de combustion (14) et au moins une deuxième chambre de combustion (15) agencée en aval de l'au moins une première chambre de combustion (14) le long d'une direction d'écoulement gazeux (D) ; le dispositif de commande (8) étant configuré pour réaliser le procédé selon l'une quelconque des revendications précédentes.
